# EUROPÄISCHE PATENTSCHRIFT

(11) **EP 1 425 132 B1**
(45) Veröffentlichungstag und Bekanntmachung des Hinweises auf die Patenterteilung: **01.02.2006**
(21) Anmeldenummer: 02777057.7
(22) Anmeldetag: 10.09.2002
(51) Int. Cl.: B23Q 3/155

(54) **WERKZEUGWECHSLER FÜR EINE WERKZEUGMASCHINE**
TOOL CHANGER FOR A MACHINE TOOL
CHANGEUR D'OUTIL POUR UNE MACHINE-OUTIL

(30) Priorität: 10.09.2001 DE 20114908 U
(43) Veröffentlichungstag der Anmeldung: 09.06.2004
(73) Patentinhaber: Deckel Maho Geretsried GmbH, 82538 Geretsried (DE)
(72) Erfinder: KESSLER, Kurt, 81673 München (DE)
(74) Vertreter: Beetz & Partner
(86) Internationale Anmeldenummer: PCT/EP2002/010138
(87) Internationale Veröffentlichungsnummer: WO 2003/022515

(56) Entgegenhaltungen:
- DE-A- 2 410 444
- DE-A- 3 531 160
- US-A- 5 267 766
- PATENT ABSTRACTS OF JAPAN vol. 009, no. 179 (M-399), 24. Juli 1985 (1985-07-24) & JP 60 048234 A (TOYOTA JIDOSHA KK;OTHERS: 01), 15. März 1985 (1985-03-15)

## Beschreibung

Die Erfindung betrifft einen Werkzeugwechsler für eine Werkzeugmaschine, bestehend aus mindestens zwei zangenförmigen Werkzeuggreifern, deren Schenkel zum Eingriff in die Ringnut am breiteren Ende eines Werkzeugkegels ausgebildet sind, aus einem um seine Mittelachse motorisch verdrehbaren Träger, an dessen gegenüberliegenden Seiten die Greifer achssymmetrisch mit nach außen weisendem Maul befestigt sind, und aus einer Tragkonstruktion für den Träger, die einen Antrieb zum Bewegen des Trägers aufweist.

Werkzeugwechselsysteme sind in modernen programmgesteuerten Werkzeugmaschinen allgemein üblich und dienen zur Übergabe von Werkzeugen zwischen einem Werkzeugmagazin und der vertikalen oder horizontalen Arbeitsspindel der Werkzeugmaschine. Um die ausgewählten und in einer vorgegebenen Wechselposition befindlichen Werkzeuge aufnehmen zu können, bewegen sich bestimmte Bauteile der Werkzeugwechsler inklusive ihrer zangenförmigen Greifer auf vorbestimmten Bahnen, so daß die Greifer mit ihren Zangen seitlich in die hierzu ausgebildete Ringnut des in der Wechselposition des Magazins befindlichen Werkzeugkegels eingreifen können. Durch eine Abziehbewegung wird das Werkzeug aus dem Magazin herausgenommen und durch eine Dreh- oder Schwenkbewegung des Werkzeugwechslers in eine Position gebracht, in welcher das Einwechseln dieses Werkzeugs in die Arbeitsspindel erfolgen kann. Der Wechselvorgang eines "gebrauchten" Werkzeuges aus der Arbeitsspindel in einen offenen Platz des Werkzeugmagazins erfolgt in gegenläufiger Funktionsfolge.

Aus der DE 35 31 160 A1 ist ein Werkzeugwechsler für eine Werkzeugmaschine bekannt, dessen Greifer seitlich an den Flansch eines Werkzeugkegels heranbewegt wird und zwei gegeneinander bewegbare Schenkel enthält, die nach Umgreifen eines Werkzeugkegels mittels einer Vorrichtung verriegelbar sind, um den Werkzeugkegel im Greifer gegen Herausziehen zu sichern. An der Werkzeugmaschine ist eine Kulissenführung vorgesehen, die das Verriegelungselement axial aus dem Bereich des Flansches am Werkzeugkegel drückt, wenn der Greifer vor die Werkzeugaufnahme bewegt wird.

In der DE 42 15 697 A ist ein anderer Werkzeugwechsler für Werkzeugmaschinen beschrieben, dessen Greifer an einem zwischen dem Werkzeugmagazin und der Werkzeugaufnahmestelle der Arbeitsspindel verfahrbar ausgebildeten Wechslerarm angeordnet ist. Der Wechslerarm trägt zwei nebeneinander angeordnete Greifer, die in ihrer Grundstellung zum Halten von Werkzeugen achsparallel zu einer Spindelachse ausgebildet sind. Die beiden Greifer sind über eine Schwenkeinrichtung mit dem Wechslerarm verbunden und können relativ zur Spindelachse in Richtung einer Verbindungslinie zwischen beiden Greifern synchron parallel verschoben werden.

Ferner ist aus der DE 37 17 201 A ein Greifer für Werkzeuge einer Werkzeugmaschine bekannt, der zwei bewegliche Backen für den formschlüssigen Eingriff in die Nut eines Werkzeugkegels aufweist. Für den formschlüssigen Eingriff der Greiferschenkel in die Nut am verdickten Ende des Werkzeugkegels enthält der Greifer ein bewegbares Betätigungselement, das die Schenkel in eine Spreizstellung zum Einführen des Werkzeugkegels bzw. in eine Schließstellung zum formschlüssigen Ergreifen des Werkzeugkegels bewegt. Dieses Betätigungselement wird von einem raumfesten Anschlag der Werkzeugmaschine betätigt. Ferner enthält der Greifer zwei feste Backen, die koaxial zu den beiden Greiferschenkeln angeordnet sind und beide über die Enden der Greiferschenkel vorstehen. Beide Backen gehen in eine gemeinsame halbkreisförmige Aufnahme über, in der eine Zentriernut ausgebildet ist. Die Verwendung von beweglichen Greiferschenkeln und zusätzlichen festen Backen pro Greifer ist technisch aufwendig und bietet die Möglichkeiten zu Funktionsstörungen.

Bei modernen Fräs- und Bohrzentren für die Großserienfertigung von Werkstücken liegen die reinen Bearbeitungszeiten mit einem einzigen Werkzeug häufig im Sekundenbereich. Da nach jedem Bearbeitungsvorgang ein Werkzeugwechsel erfolgt und jeder Werkzeugwechsel einige Sekunden dauert, ergibt sich ein relativ ungünstiges Verhältnis zwischen der Gesamtbearbeitungszeit und der für die entsprechende Anzahl an Werkzkeugwechseln benötigten Zeitspanne, was sich naturgemäß ungünstig auf die Produktionsleistung der Maschine auswirkt. Dieses Span-zu-Span/Arbeitszeit-Verhältnis wird bei Verwendung von Hochleistungsspindeln, beispielsweise den sogenannten Schnellaufspindeln, aufgrund deren hohen Spanleistungen noch ungünstiger.

Aufgabe der Erfindung ist es, die für einen Werkzeugwechsel benötigte Zeitspanne mit technisch einfachen Mitteln weiter zu verkürzen.

Diese Aufgabe wird erfindungsgemäß dadurch gelöst, daß ein Schenkel von mindestens einem der zangenförmigen Greifer des Werkzeugwechslers zu einem vorkragenden Haltefinger verlängert ist.

Durch die erfindungsgemäße Ausbildung der in dem neuen Werkzeugwechsler eingesetzten zangenförmigen Greifer wird die für den Eingriff des zangenförmigen Greifers in die Ringnut am Werkzeugkegel und für das Lösen des Werkzeugkegels aus seiner Spindelaufnahme benötigte Zeitspanne dadurch verkürzt, daß die den Werkzeugkegel fixierende Spannzange etwas früher gelöst werden kann, als dies bei herkömmlichen Greifern der Fall war. Bisher konnte die den Werkzeugkegel in seiner kegelförmigen Spindelaufnahme fixierende Spannzange erst dann gelöst werden, nachdem sich der zangenförmige Greifer mit der Ringnut im Werkzeugkegel in vollem Eingriff befand. Ein frühzeitigeres Lösen der Spannzange war nicht möglich, weil dann durch die erfolgte Freigabe des Werkzeugkegels ein zuverlässiger Eingriff der zangenförmigen Greifer in die Kegelringnut nicht gewährleistet war. Durch die erfindungsgemäße Verlängerung zumindest eines der beiden Greiferschenkel zu einem vorstehenden Haltefinger wird erreicht, daß dieser Haltefinger, dessen Profil an den Querschnitt der Ringnut angepaßt ist, bereits während der seitlichen Zugriffsbewegung in die Ringnut des zu diesem Zeitpunkt noch festgespannten Werkzeugkegels hineingleitet und dabei den Werkzeugkegel in der kegelförmigen Aufnahme hält. Dies ermöglicht ein früheres Lösen der Spannzange noch während der Bewegung des Greifers zum Werkzeug, d.h. die beiden Vorgänge des Lösens der Spannzange und des Zugriffs durch den zangenförmigen Greifer werden zeitlich zumindest teilweise überlagert, was zu einer Verkürzung der für beide Vorgänge benötigten Gesamtzeit führt. Obgleich die Zeitersparnis pro Werkzeugwechselvorgang nur relativ gering ist und im Bereich von einigen Zehntel bis zu 1 - 2. s liegt, ergibt sich bei der Kurzzeitbearbeitung in der Großserienfertigung doch eine merkbare Verlängerung der möglichen Spanzeiten einer Maschine, und dies durch die technisch äußerst einfache Maßnahme der Verlängerung eines Zangenschenkels.

Weitere Vorzüge und Besonderheiten des erfindungsgemäßen Werkzeugwechslers ergeben sich aus der folgenden Beschreibung eines Ausführungsbeispiels anhand der Zeichnung, in der eine Werkzeugmaschine mit dem erfindungsgemäß ausgebildeten Werkzeugwechsler schematisch dargestellt ist.

Wenn die Werkzeugwechsel bei einer Maschine durch eine Linearbewegung entweder der Arbeitsspindel oder aber des Werkzeugwechslers erfolgt und dabei der Greifer seitlich in die Aufnahme- bzw. Haltenut des Werkzeugkegels eingeschoben wird, ist der vorkragende Haltefinger an dem einen der Greiferschenkel geradlinig ausgebildet.

Es besteht auch die Möglichkeit, daß der Eingriff des Greifers in die Nut des Werkzeugkegels am Ende einer Drehbewegung des Greifers erfolgt. In diesem Fall ist der an dem einen Schenkel des Greifers ausgebildete vorkragende Haltefinger bogenförmig, vorzugsweise kreisbogenförmig, ausgebildet, so daß der Finger am Ende einer kreisbogenförmigen Bewegungsbahn in die Aufnahmenut des Werkzeugkegels eingreift, bevor eine volle Anlage erfolgt. Auch in diesem Fall kann die in der Arbeitsspindel integrierte Spannzange vorzeitig gelöst werden, da der Werkzeugkegel mit dem Werkzeug durch den Eingriff des Haltefingers in die Kegelnut bis zum nachfolgenden vollen Eingriff des Greifers gehalten wird. Bei derartigen Wechselvorgängen wird ein gleichartiger Sicherungseffekt erzielt, wenn mindestens ein Schenkel der Greifer in ein bogenförmiges Halteelement übergeht, das sich vor das Ende des jeweiligen Greiferschenkels erstreckt und die gleiche Sicherungs- bzw. Haltefunktion wie der oben erläuterte Haltefinger hat. Zweckmäßig ist dieses Haltesegment als Kreissegment ausgebildet und am Träger befestigt.

Der durch die Erfindung erreichte Sicherungseffekt eines Werkzeughalters beim Werkzeugwechsel wird auch bei Greifern erreicht, deren Schenkel starr, d.h. nicht gegeneinander beweglich sind. In diesem Fall ist zweckmäßig am Übergang zwischen dem Haltefinger bzw. dem Haltesegment und dem Innenraum des Greifers ein Sicherungshalter vorgesehen, der ein vorstehendes federbelastetes Halteglied aufweisen sollte, das einen Eingriff des Greifers in die Nut des Werkzeugkegels, z.B. durch federbelastetes Ausweichen gestattet und nach erfolgtem Eingriff in seine vorstehende Sicherungsposition durch Federwirkung zurückkehrt.

Einen weiter beschleunigten Werkzeugwechsel ermöglicht ein Werkzeugwechsler, der an einem gemeinsamen Träger vier Greifer paarweise diametral gegenüberliegende aufweist, wodurch einzuwechselnde Werkzeuge in einer Standby-Position gehalten werden können und zum Aus- und Einwechseln eines Werkzeugs jeweils nur eine Drehbewegung von 90° erforderlich ist.

Weiter Besonderheiten und Vorzüge des erfindungsgemäßen Werkzeugwechslers ergeben sich aus der folgenden Beschreibung von Ausführungsbeispielen anhand der Zeichnung. Es zeigen:
Fig. 1 eine Werkzeugmaschine mit einem erfindungsgemäßen Werkzeugwechsler in schematischer perspektivischer Darstellung;
Fig. 2 bis 4 weitere Ausführungen des Werkzeugwechslers in perspektivischer Darstellung.

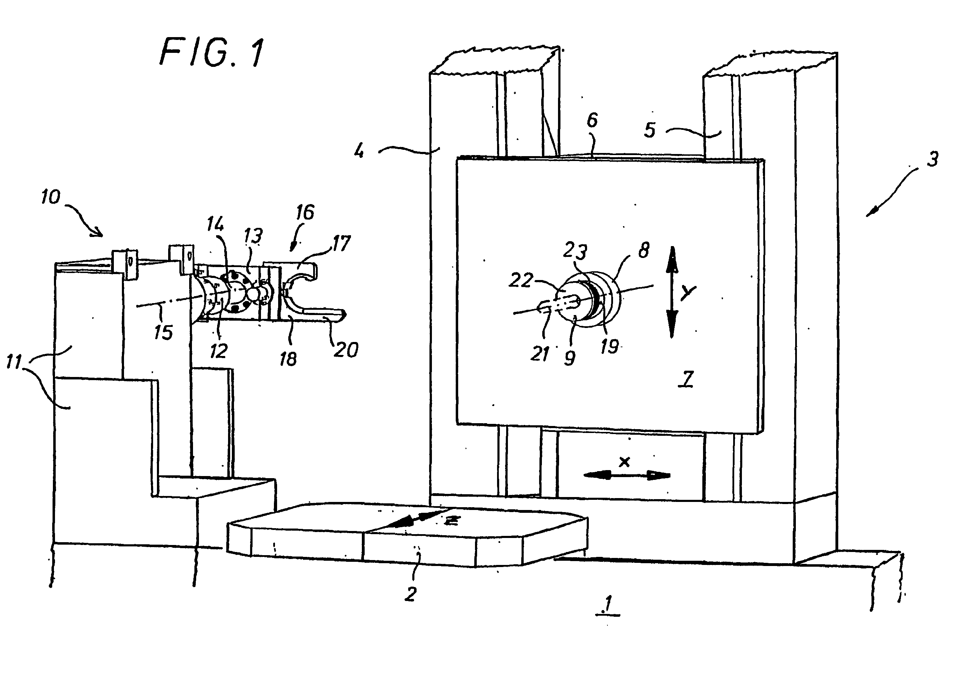

Bei der in Fig. 1 schematisch dargestellten Werkzeugmaschine handelt es sich um ein für die Großserienfertigung konzipiertes Horizontal-Bearbeitungszentrum mit einem hochsteifen Bett 1 als Träger eines in Richtung des Doppelpfeils (Z-Koordinatenachse) verfahrbaren Werkstücktisches 2. Die Maschine weist ferner einen in Richtung des Doppelpfeils (X-Koordinatenachse) verfahrbaren Ständer 3 auf, dessen beide vertikalen Säulen 4, 5 durch ein oberes - nicht dargestelltes - Querhaupt fest miteinander verbunden sind. In dem Zwischenraum zwischen beiden Säulen 4, 5 ist ein in Richtung des Doppelpfeils (Y-Koordinatenachse) verfahrbarer Schlitten 6 angeordnet, der eine frontale Abdeckung 7 aufweist und den Spindelkopf 8 einer horizontalen Arbeitsspindel 9 trägt.

In Fig. 1 seitlich neben den dargestellten Grundelementen der Werkzeugmaschine befindet sich ein Werkzeugwechsler 10, der einen stationären Unterbau 11 und eine Tragkonstruktion 12 für einen Träger 13 aufweist. Wie dargestellt, enthält die Tragkonstruktion 12 einen Teleskoparm 14, der in Richtung seiner Längsachse 15 mittels z.B. eines - nicht dargestellten - Druckmittelzylinders aus- und einfahrbar ist. Am freien Ende dieses Teleskoparms 14 ist quer der als Plattenkonstruktion ausgebildete Träger 13 montiert, der an seinen beiden gegenüberliegenden Seiten je einen zangenförmigen Greifer 16 aufweist, wobei in der Zeichnung nur der rechte Greifer dargestellt ist. Jeder Greifer 16 weist zwei gegenüberliegende Schenkel 17, 18 auf, von denen zumindest der Schenkel 17 für den Zugriff gelenkig gelagert ist und beim Angriff an der Ringnut 23 im äußeren Bund 22 des - standardisierten - Werkzeugkegels 19 eine geringfügige Öffnungsbewegung ausführen kann. Zur sicheren Halterung des Werkzeugkegels 19 ist dieser Schenkel 17 in seiner Halteposition verriegelbar. Der in der Zeichnung untere Schenkel 18 ist zu einem vorstehenden Haltefinger 20 verlängert. Dieser Haltefinger 20 weist ein dem Querschnitt der Ringnut im Bund des Werkzeugkegels angepaßtes Profil auf.

Ein Werkzeugwechsel läuft bei der vorstehend als Ausführungsbeispiel beschriebenen Maschine wie folgt ab. Nach einem Bearbeitungsvorgang mit dem dargestellten Bohrwerkzeug 21 verfährt der Ständer 3 in X-Koordinatenrichtung, und gleichzeitig verfährt der Vertikalschlitten 6 in Y-Koordinatenrichtung, so daß sich die Mittelachse der Arbeitsspindel in einer Horizontalebene befindet, in welcher auch die Mittelachse des Greifers 16 liegt. Kurz vor dem Ende der Horizontalbewegung des Fahrständers 3 gelangt der verlängerte Haltefinger 20 des Greifers 16 in Eingriff mit der am äußeren Bund 22 des Werkzeugkegels 19 ausgebildeten Ringnut 23. Da dieser Haltefinger 20 starr ist, wird der Werkzeugkegel 19 durch diesen Eingriff sicher und kippfrei festgehalten, so daß unmittelbar danach und noch vor dem vollen Eingriff der beiden Schenkel 17, 18 des Greifers 16 der Lösevorgang der im Inneren der Arbeitsspindel 8 angeordneten Spannzange erfolgen kann. Sobald der Werkzeugkegel 19 von dem zangenförmigen Greifer 16 - bei entriegeltem oberen Schenkel 17 - ergriffen worden ist und der obere Schenkel 17 in seiner Greifstellung durch die Verriegelung fixiert ist, erfolgt eine Einziehbewegung des Teleskoparmes 14, um den zuvor von der Spannzange freigegebenen Werkzeugkegel 19 aus der kegelförmigen Aufnahme im Spindelinneren herauszuziehen. Danach erfolgt eine Verdrehung des Trägers 13 um die Achse 15 um 180°, so daß der mit dem neuen Werkzeug besetzte Greifer in die Übergabestellung des - bisherigen - Greifers 16 gelangt. Das Einsetzen des neuen Werkzeuges mit seinem Werkzeugkegel in die Aufnahme der Arbeitsspindel 8 erfolgt in entsprechender Weise, wobei das Fixieren des Werkzeugkegels in seiner Aufnahme durch die Spannzange zu einem früheren Zeitpunkt erfolgen kann, d.h., am Beginn der horizontalen Abziehbewegung durch Verfahren des Ständers 3, da auch das neue Werkzeug mit seinem Werkzeugkegel 19 durch den etwas verlängerten Eingriff des Haltefingers 20 in der Ringnut 23 gehalten bleibt.

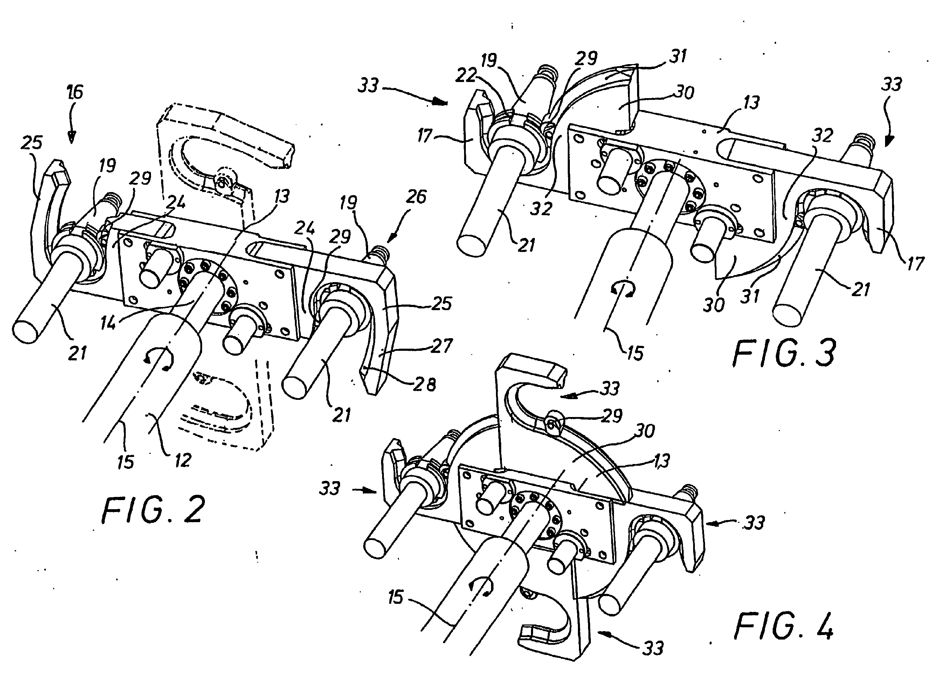

Die in den Fig. 2 bis 4 dargestellten weiteren Ausführungsbeispielen von erfindungsgemäßen Werkzeugwechseln sind für den Einsatz der in Fig. 1 dargestellten Werkzeugmaschine konzipiert. Allerdings können die Werkzeugwechsler nach den Fig. 1 bis 4 auch-in anderen Werkzeugmaschinen und Bearbeitungszentren eingesetzt werden. In der folgenden Beschreibung sind dem Werkzeugwechsler nach Fig. 1 entsprechende Bauteile mit den gleichen Bezugszeichen gekennzeichnet. Bei den in den Fig. 2 bis 4 dargestellten Ausführungen erfolgt die Werkzeugübergabe vom Magazin in den Werkzeugwechsler und vom Werkzeugwechsler in die Arbeitsspindel jeweils durch eine Drehbewegung des Trägers 13 um die Längsachse 15 und nicht - wie beim Ausführungsbeispiel nach Fig. 1 - durch eine translatorische Linearbewegung der Arbeitsspindel 8.

Die Ausführung nach Fig. 2 entspricht weitgehend dem vorstehend anhand Fig. 1 beschriebenen Werkzeugwechsler. Unterschiedlich ist die Ausbildung der beiden Greifer 26, die am radial äußeren Greiferschenkel 25 einen verlängerten starren Haltefinger 27 aufweisen, der an seiner kreisbogenförmigen Innenseite einen ebenfalls kreisbogenförmigen Führungssteg 28 trägt. Der Bogenradius dieses Führungssteges 28 ist an den Flugkreis um die Drehachse 15 angepaßt, so daß bei einer Drehbewegung des Trägers 14 dieser Führungssteg 18 in die Ringnut am Bund 22 des Werkzeugkegels 19 kollisionsfrei eingreift. Die Sicherungswirkung des Haltefingers 27 entspricht derjenigen des geradlinigen Haltefingers 20 der Ausführung nach Fig. 1. Ein weiterer Unterschied der Greifer 26 gegenüber der Ausführung nach Fig. 1 besteht noch darin, daß die beiden Greiferschenkel 24, 25 starr, d.h. gegeneinander unbeweglich, sind, was eine konstruktive Vereinfachung bedeutet. Um die Lage des ergriffenen Werkzeugkegels 19 in dem jeweiligen Greifer 26 zu sichern, ist bei dieser Ausführung an jedem radial inneren Schenkel 24 ein Sicherungshalter 29 vorgesehen, der hier aus einer vorspringenden federbelasteten Laufrolle besteht, die bei einem Einschubvorgang gegen die Federkraft zurückgedrückt wird und selbsttätig in ihre vorstehende dargestellte Lage zurückkehrt, sobald sich der Werkzeugkegel vollständig im Greifer befindet. Dieser Sicherungshalter 29 kann über einen elektrischen Schalter mit der Programmsteuerung bzw. dem Nothalt der Werkzeugmaschine verbunden sein, um bei einem unvollständigen Eingriff die Maschine stillzusetzen. Statt der dargestellten Rollen können als Sicherungshalter 29 auch andere geeignete Elemente, wie gegen Federkraft bewegbare Rampen, verwendet werden.

Die Ausführung nach Fig. 3 enthält statt der verlängerten Haltefinger 20 bzw. 27 der Ausführungen nach den Fig. 1 und 2 je ein bogenförmiges Haltesegment 30 pro Greifer, das die Fortsetzung des radial inneren Greiferschenkels 31 bildet und am Träger 13 befestigt ist. Auch bei dieser Ausführung sind die beiden Greiferschenkel 17 und 31 gegeneinander fest. Auf dem jeweiligen Haltesegment 30 befindet sich ein Führungssteg 31, der bei einem Eingriffsvorgang in die Ringnut 23 am Bund 22 des Werkzeugkegels 19 in Eingriff gelangt und in ähnlicher Weise wie die verlängerten Finger 20, 27 eine Führungs- und Haltefunktion erfüllt, bevor der Werkzeugkegel 19 vom Greifer 17 voll ergriffen ist.

Der in Fig. 4 dargestellte Werkzeugwechsler unterscheidet sich hinsichtlich der Ausführung nach Fig. 3 nur durch Vorsehen von insgesamt vier Greifern, die paarweise diametral gegenüberliegend, d.h. um einen rechten Winkel gegeneinander versetzt am Träger 13 befestigt sind. Wie ersichtlich, entspricht die konstruktive Ausbildung der vier Greifer 17 der vorstehend beschriebenen Ausführung nach Fig. 3.

Die vorstehend beschriebenen Werkzeugwechsler können in verschiedenartigen Werkzeugmaschinen eingesetzt werden, wobei konstruktive und funktionale Abwandlungen zur Anpassung an die jeweilige Maschine möglich sind. Daneben können auch Einzelmerkmale einer der vorstehend beschriebenen Wechslerausführungen bei anderen Werkzeugwechslern eingesetzt werden, d.h. andere Kombinationen der beschriebenen und dargestellten Einzelheiten, beispielsweise das Vorsehen der Haltefinger 27 bei zwei oder allen vier Greifern der Ausführung nach Fig. 4 sind möglich.

Die Erfindung ist nicht auf das dargestellte und vorstehend beschriebene Ausführungsbeispiel beschränkt. Vielmehr kann der erfindungsgemäß ausgebildete Werkzeugwechsler bei unterschiedlichsten Typen von Werkzeugmaschinen eingesetzt werden, bei denen es auf extrem kurze Wechselzeiten ankommt. Hierzu gehören beispielsweise auch Werkzeugmaschinen, bei denen die für einen Werkzeugwechsel notwendigen Bewegungen vom Werkzeugwechsler ausgeführt werden.

## Patentansprüche

1. Werkzeugwechsler für eine Werkzeugmaschine, bestehend aus
- mindestens zwei zangenförmigen Greifern (16), deren Schenkel (17, 18) zum Eingriff in die Ringnut (23) am breiteren Ende eines Werkzeugkegels gegeneinander bewegbar und verriegelbar ausgebildet sind,
- einem um seine Mittelachse (15) verdrehbaren Träger (13), an dessen gegenüberliegenden Seiten die Greifer (16) achssymmetrisch mit nach außen weisendem Maul befestigt sind, und
- einer Tragkonstruktion (11, 12) für den Träger (13), die einen Antrieb zum Bewegen des Trägers (13) in der zur Achse der Arbeitsspindel parallelen Mittelachse (15) aufweist,
**dadurch gekennzeichnet, daß**
ein Schenkel (18) von mindestens einem der Greifer (16) zu einem vorkragenden Haltefinger (20) verlängert ist.

2. Werkzeugwechsler nach Anspruch 1, **dadurch gekennzeichnet, daß** die Arbeitsspindel (9) für den seitlichen Eingriff des Greifers (16) in einer horizontalen Richtung quer zur Spindellängsachse verfahrbar ist.

3. Werkzeugwechsler nach Anspruch 1, **dadurch gekennzeichnet, daß** der vorkragende Haltefinger (27) zumindest an seinem radialen Innenbereich bogenförmig ausgebildet ist und einen bogenförmigen Halte- und Führungssteg (28) aufweist.

4. Werkzeugwechsler nach dem Oberbegriff des Anspruchs 1, **dadurch gekennzeichnet, daß** ein Schenkel (32) der Greifer (33) in ein bogenförmiges Haltesegment (30) übergeht, das an seiner Bogenfläche einen Führungssteg (31) trägt.

5. Werkzeugmaschine nach Anspruch 4, **dadurch gekennzeichnet, daß** das Haltesegment (30) des Greifers (33) an dem gemeinsamen träger (13) befestigt ist.

6. Werkzeugwechsler nach einem der vorstehenden Ansprüche, **dadurch gekennzeichnet, daß** die beiden Schenkel (17, 32) der Greifer (33) starr sind und an zumindest einem Schenkel (32) ein Sicherungshalter (29) vorgesehen ist.

7. Werkzeugwechsler nach Anspruch 6, **dadurch gekennzeichnet, daß** der Sicherungshalter (29) ein vorstehendes federbelastetes Halteglied enthält.

8. Werkzeugwechsler nach einem der vorstehenden Ansprüche, **dadurch gekennzeichnet, daß** an einem gemeinsamen Träger (13) vier Greifer (33) paarweise diametral gegenüberliegend angeordnet sind.

## Claims

1. A tool changer for a machine tool, consisting of
- at least two tong-shaped grippers (16), the legs (17, 18) of which are formed to be movable in opposite directions and lockable for engaging with the ring groove (23) at a broader end of a tool taper,
- a carrier (13) rotatable around its centre axis (15), on the opposing sides of which the grippers (16) are mounted in axis-symmetry with the mouth facing outward, and
a support structure (11, 12) for the carrier (13) comprising a drive for moving the carrier (13) in the centre axis parallel to the axis of the work spindle,
**characterized in that**
one leg (18) of at least one of the grippers (16) is extended to a protruding holding finger (20).

2. The tool changer as set forth in claim 1, **characterized in that** the work spindle (9) can travel in a horizontal direction across the longitudinal axis of the spindle for a lateral engaging of the gripper (16).

3. The tool changer as set forth in claim 1, **characterized in that** the protruding holding finger (27) is curved at least at its radial inner area and includes a curved holding and guiding bracket.

4. The tool changer as set forth in the preamble of claim 1, **characterized in that** one leg (32) of the grippers (33) changes gradually into a curved holding segment (30) carrying a guiding bracket on its curved surface.

5. The tool changer as set forth in claim 4, **characterized in that** the holding segment (30) of the gripper (33) is mounted on the common carrier (13).

6. The tool changer as set forth in any of the preceding claims, **characterized in that** the two legs (17, 32) of the grippers (33) are rigid and a securing holder (29) is provided at least on one leg (32).

7. The tool changer as set forth in claim 6, **characterized in that** the securing holder (29) comprises a projecting spring-biased holding member.

8. The tool changer as set forth in any of the preceding claims, **characterized in that** four grippers (33) are arranged in pairs diametrically opposed on a common carrier (13).

## Revendications

1. Changeur d'outil pour une machine-outil, constitué de:
- au moins deux griffes en forme de pince (16), dont les épaulements (17, 18) sont conçus réciproquement de manière à être mobiles et verrouillables pour permettre l'engrenage dans la rainure circulaire (23) à l'extrémité la plus large d'un cône d'outillage,
- un support (13) rotatif autour de son axe médian (15), sur les faces opposées duquel les griffes (16) sont fixées en axe de symétrie avec la mâchoire pointant vers l'extérieur, et
- une ossature (11, 12) pour le support (13) qui présente un entraînement pour le déplacement du support (13) dans l'axe médian (15) parallèle à l'axe de l'arbre moteur,
**caractérisé en ce que**
un épaulement (18) d'au moins une des griffes (16) se prolonge en une patte de retenue formant un ressaut (20).

2. Changeur d'outil selon la revendication 1, **caractérisé en ce que** l'arbre moteur (9) peut être déplacé dans une direction horizontale transversalement par rapport à l'axe longitudinal de l'arbre pour la saisie latérale de la griffe (16).

3. Changeur d'outil selon la revendication 1, **caractérisé en ce que** la patte de retenue formant un ressaut (27) est conçue en forme d'arc de cercle au moins au niveau de sa zone interne radiale et présente une âme de blocage et de guidage en forme d'arc de cercle (28).

4. Changeur d'outil selon le préambule de la revendication 1, **caractérisé en ce qu'**un épaulement (32) des griffes (33) se transforme en un segment support en forme d'arc de cercle (30), qui porte sur sa surface arquée une âme de guidage (31).

5. Machine-outil selon la revendication 4, **caractérisée en ce que** le segment support (30) de la griffe (33) est fixé sur le support commun (13).

6. Changeur d'outil selon l'une des revendications précédentes, **caractérisé en ce que** les deux épaulements (17, 32) des griffes (33) sont fixes et que l'on a prévu au moins sur un épaulement (32) une sécurité (29).

7. Changeur d'outil selon la revendication 6, **caractérisé en ce que** la sécurité (29) comprend un élément de blocage saillant contraint par un ressort.

8. Changeur d'outil selon l'une des revendications précédentes, **caractérisé en ce que** quatre griffes (33) sont disposées, diamétralement opposées, par paires sur un support commun (13).
